# EUROPÄISCHE PATENTSCHRIFT

(11) **EP 1 796 946 B1**
(45) Veröffentlichungstag und Bekanntmachung des Hinweises auf die Patenterteilung: **12.03.2008**
(21) Anmeldenummer: 05795047.9
(22) Anmeldetag: 28.09.2005
(51) Int. Cl.: B61H 5/00, F16D 55/224, F16D 65/14, F16D 65/28

(54) **SCHEIBENBREMSE FÜR SCHIENENFAHRZEUGE**
DISC BRAKE FOR RAILWAY VEHICLES
FREIN A DISQUE POUR VEHICULES SUR RAILS

(30) Priorität: 30.09.2004 DE 102004048218
(43) Veröffentlichungstag der Anmeldung: 20.06.2007
(73) Patentinhaber: KNORR-BREMSE Systeme für Schienenfahrzeuge GmbH, 80809 München (DE)
(72) Erfinder: WIRTH, Xaver, 85737 Ismaning (DE)
(74) Vertreter: Mattusch, Gundula
(86) Internationale Anmeldenummer: PCT/EP2005/010446
(87) Internationale Veröffentlichungsnummer: WO 2006/037523

(56) Entgegenhaltungen:
- EP-A- 0 731 286
- DE-A1- 3 503 066
- DE-A1- 4 133 593
- US-A- 4 480 722

## Beschreibung

Die vorliegende Erfindung betrifft eine Scheibenbremse gemäß dem Oberbegriff des Anspruchs 1.

Derartige Scheibenbremsen, wie z.B. in EP-A-0 731 286 offenbart, kommen vorzugsweise bei Schienenfahrzeugen zum Einsatz, wobei die Bremskraft über eine Bremszange aufgebracht wird, deren Zangenhebel gelenkig mit einem Belaghalter verbunden sind, der den gegen eine Bremsscheibe pressbaren Bremsbelag trägt.

Der gelenkige Anschluss der Zangenhebel am jeweiligen Belaghalter erfolgt bislang über Scharniergelenke, deren fluchtende Gelenkachsen eine sogenannte Lastangriffslinie bilden.

Dabei verläuft die Gelenkachse außerhalb der Schwerlinie des Bremsbelages und zwar, bezogen auf die Mitte der Bremsscheibe weiter innen, parallel zu einer zugeordneten Tangente der Bremsscheibe.

Hierdurch wird erreicht, dass die geringere Gleitgeschwindigkeit bei kleinerem Radius durch einen höheren Belagdruck kompensiert wird, so dass im Idealfall der um die Gelenk- das heißt die Scharnierachse drehbare Bremsbelag parallel verschleißt, was zu einer optimalen Belagausnutzung führt.

Der Abstand zwischen der Belagschwerlinie und der Gelenkachse kann für den genannten parallelen Verschleiß berechnet oder experimentell ermittelt werden.

Allerdings ist dies jeweils nur für eine Bremsscheibengröße und einen bestimmten Bremsbelag möglich, da der Gleitgeschwindigkeitsgradient über den Radius mit zunehmendem Scheibendurchmesser immer flacher verläuft und verschiedene Belagmaterialien unterschiedliche Verschleißgesetzexponenten aufweisen (w = c p^{α} v^{β}).

Trotz dieser Abhängigkeiten weisen die Belaghalter einer bestimmten Nenngröße (UIC 350 cm², UIC 400 cm²) einen konstanten Gelenkachsenabstand zur Schwerlinie des Bremsbelages auf.

Um Schrägverschleißneigungen der Bremsbeläge zu minimieren, wird bisher der Belaghalter mit einer verdrehsteifen Hängelasche im Drehgestell aufgehängt. Allerdings muss aufgrund von dynamischen Achsbewegungen in Schienenfahrzeugen eine gewisse Belagverdrehung möglich sein, so dass der Belagschrägverschleiß nicht in ausreichendem Maße verhindert werden kann, wodurch sich erhebliche Kosten im Fahrbetrieb ergeben. Dies insbesondere deshalb, weil das Belagverschleißvolumen insgesamt nur bei einem parallelen Abtrag voll nutzbar ist.

Der Belagschrägverschleiß stellt sich auch bei Bremszangen ein, die keine der genannten Hängelaschen aufweisen, sondern einen sogenannten Parallellenker, wobei die diesbezügliche Problematik insbesondere bei großflächigen Bremsbelägen und einer relativ geringen Verschleißhöhe, wie bei Teilsinter-Bremsbelägen, von besonderer Bedeutung sind.

Dabei führt die Notwendigkeit einer frühzeitigen Auswechselung aufgrund des ungleichmäßigen Bremsbelagverschleißes nicht nur zu erhöhten Beschaffungskosten, sondern auch zu Kosten, die sich aus der für die Zeit der Bremsbelagerneuerung notwendigen Stillstandzeiten des Fahrzeuges ergeben. Insgesamt ist daher der Einsatz der bekannten Scheibenbremse aus wirtschaftlicher Sicht eher unbefriedigend.

Der vorliegenden Erfindung liegt die Aufgabe zugrunde, eine Scheibenbremse der gattungsgemäßen Art so weiter zu entwickeln, dass mit konstruktiv einfachen Mitteln ihre Standzeit wesentlich erhöht und die Betriebskosten insgesamt gesenkt werden.

Diese Aufgabe wird durch eine Scheibenbremse gelöst, die die Merkmale des Anspruchs 1 aufweist.

Durch diese konstruktive Ausbildung der Scheibenbremse lässt sich das Schrägverschleißproblem vollständig beseitigen, zumindest aber auf ein Minimum reduzieren und zwar im wesentlichen unabhängig von der Bremsscheibengröße und dem Typ des Bremsbelages. Je nach dem ist die Gelenkachse, also die Lastangriffslinie bereits bei der Bremszangenmontage einstellbar, und zwar nach definierten Vorgaben. Möglich ist jedoch auch, die Lage der Gelenkachse bei Auftreten von unzulässigem Schrägverschleiß im Betrieb nachträglich einzustellen.

Nach einer vorteilhaften Weiterbildung der Erfindung sind die Gelenke im Sinne von Exzentern ausgebildet, vorzugsweise als Kugelexzenter, wobei die jeweilige Kugel in rotationssymmetrischen Kugelhaltern gehalten ist, die auf ihren einander zugewandten Seiten außermittig angeordnete Kalotten aufweisen, in denen die Kugel einliegt. Die gedachte Verbindungslinie der Mittelpunkte der Kugeln bildet dabei die Lastangriffslinie, die abständig verläuft von der Drehachse der beiden Kugelhalter.

Je nach Verdrehung der Kugelhalter ändert sich die Lage der mitgeschleppten Kugel und somit der Lastangriffslinie, so dass auf einfache Weise der Belagschrägverschleiß reduziert werden kann, auch ohne das die gesamte Bremszange mit angeschlossenem Bremsbelaghalter demontiert werden muss.

Um zu gewährleisten, dass für die gewünschte exzentrische Verdrehung der Kugel beide zu einem Exzenter gehörenden Kugelhalter gleichzeitig und gleichsinnig verschwenkt werden, sind diese verdrehsicher miteinander verbunden. Hierzu können die einander zugewandten Seiten der Kugelhalter miteinander korrespondierenden Formschlussteilen aufweisen, beispielsweise mit einer Verzahnung, einer sogenannten Bogenzahnkupplung. Denkbar ist aber auch, die beiden Kugelhalter durch einen Mitnehmerstift miteinander zu verbinden. Neben der drehwinkelkonformen Bewegung ist gleichzeitig gewährleistet, dass ein Kippen des Belaghalters um die Lastangriffslinie, die sozusagen eine Schwenkachse des Belaghalters bildet, möglich ist. Diese Schwenkbarkeit des Belaghalters bzw. des angeschlossenen Bremsbelages ist notwendig, um bei fortschreitendem Belagverschleiß aufgrund der Winkeländerung der Zangenhebel eine Parallelität der Belagreibflächen sicher zu stellen.

Die bauliche Realisierung dieser beiden Forderungen, nämlich der gleichen Drehbewegungen beider Kugelhalter und dem geforderten Freiheitsgrad zur gleichzeitigen Schwenkbarkeit, kann durch den Eingriff von radial angeordneten, in einem Kugelhalter fest positionierten Zapfen in Schlitzen des anderen Kugelhalters erfolgen.

Weitere vorteilhafte Ausbildungen sind in den Unteransprüchen gekennzeichnet.

Ausführungsbeispiele der Erfindung werden nachfolgend anhand der beigefügten Zeichnungen beschrieben.

- Es zeigen:
- Figur 1: einen Längsschnitt durch einen Teil der erfindungsgemäßen Scheibenbremse
- Figur 2: einen Querschnitt durch eine Einzelheit eines weiteren Ausführungsbeispiel der Scheibenbremse
- Figur 3: eine schematische Draufsicht auf eine Einzelheit der Scheibenbremse
- Figur 4: die Einzelheit eines weiteren Ausführungsbeispieles der Erfindung in einer Querschnittsdarstellung
- Figur 5: eine schematische Darstellung eines sich aus der Erfindung ergebenden Funktionszusammenhangs

In den Figuren ist ein Teil einer Scheibenbremse dargestellt, mit einer Bremsscheibe 18 und mindestens einem, vorzugsweise zwei dann beidseitig mittels einer Bremszange 19 an die Bremsscheibe 18 anpressbaren Bremsbelägen 2.

Jeder Bremsbelag 2 ist an einem Belaghalter 1 befestigt, an dem Zangenhebel 10 der Bremszange 19 über jeweils ein Gelenk 3 angeschlossen sind.

Erfindungsgemäß ist das Gelenk 3 und damit eine Lastangriffslinie 13 lageveränderbar, wobei eine gedachte Verbindungslinie der Gelenkachsen der an dem Belaghalter 1 vorgesehenen zwei Gelenke 3 die besagte Lastangriffslinie und damit eine Kippkante für den Belaghalter 1 bilden.

Jedes Gelenk 3 ist als Kugelexzenter ausgebildet und weist einen oberen Kugelhalter 4, der über einen angeschlossenen Zapfen 7 drehbar am Zangenhebel 10 gelagert ist, und einen unteren Kugelhalter 5 auf, der wiederum drehbar am Belaghalter 1 festgelegt ist, wobei der obere und untere Kugelhalter 4, 5 als rotationssymmetrische Körper eine gemeinsame Drehachse aufweisen.

Zwischen den Kugelhaltern 4, 5 ist außermittig eine Kugel 6 angeordnet, die in Kalotten der Kugelhalter 4, 5 einliegen, die auf den sich gegenüberliegenden Seiten eingebracht sind.

Zur Montagesicherung, also um die beiden Kugelhalter 4, 5 jedes Gelenkes 3 auch bei entspannter Bremszange 19 in ihrer Position zueinander zu halten, ist eine Bügelfeder 11 vorgesehen, die in einer Halterung 12 des Belaghalters 1 gelagert ist und die beidseitig in den jeweiligen Zangenhebel 10 eingreift, so dass dieser gegen das Gelenk 3 gedrückt wird.

Zur Lageveränderung der Lastangriffslinie 13, die, wie erwähnt, definiert ist als Verbindungslinie der beiden Kugelmittelpunkte, wird der Zapfen 7 des mit dem Zangenhebel 10 verbundenen oberen Kugelhalters 4 gedreht, wozu eine Werkzeugaufnahme 8 für das Einstecken eines geeigneten Werkzeuges vorgesehen ist.

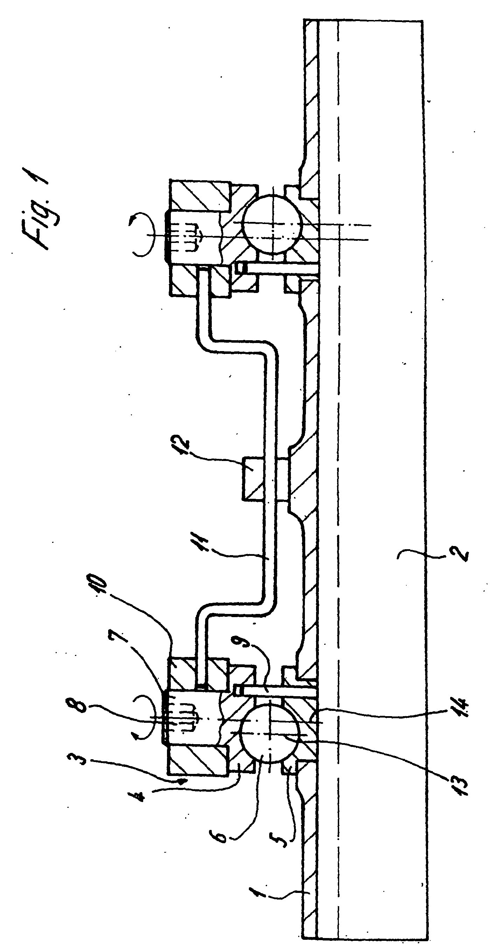

Für eine notwendige gleichzeitige Verdrehung um den gleichen Drehwinkel des unteren Kugelhalters 5 sind die beiden Kugelhalter 4, 5 bei dem in der Figur 1 gezeigten Beispiel durch Mitnehmerstifte 9 verbunden.

Die Lastangriffslinie 13 bildet eine Kippkante für den Belaghalter, so dass der untere Kugelhalter 5 gegenüber dem oberen Kugelhalter 4 entsprechend schwenkbar sein muss, unter Berücksichtigung, dass der untere Kugelhalter 5 zwar drehbar, ansonsten jedoch unbeweglich in dem Belaghalter 1 einliegt.

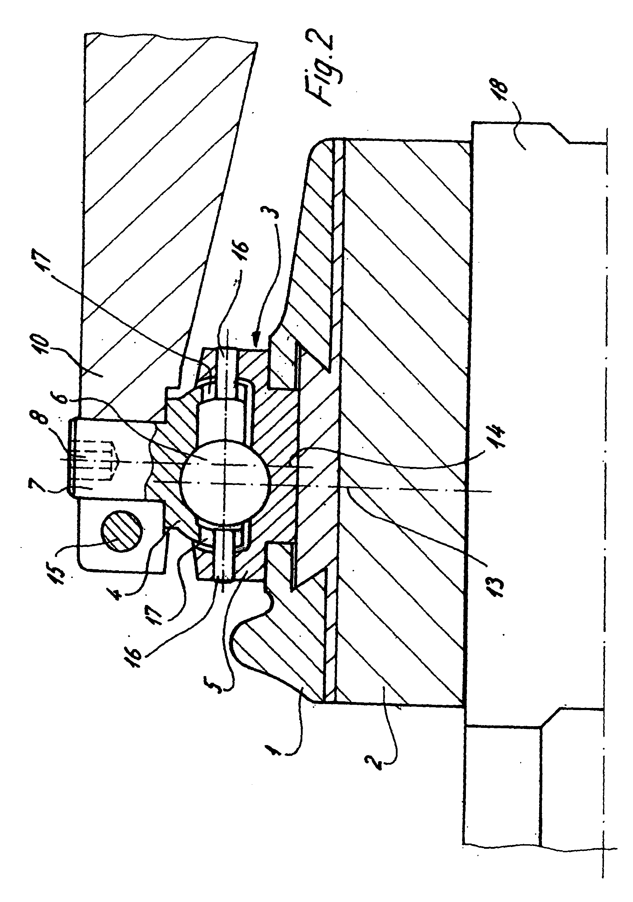

Zur Verschwenkung des unteren Kugelhalters 5 weist bei dem in der Figur 2 gezeigten Beispiel der obere Kugelhalter 4 in Schwenkrichtung sich erstreckende Schlitze 17 auf, in die jeweils ein mit dem unteren Kugelhalter 5 fest verbundener Stift 16 eingreift, der in Drehrichtung der beiden Kugelhalter 4, 5 als Mitnehmer fungiert. Im übrigen ist der Zapfen 7 und damit das Gelenk 3 insgesamt in dem Zangenhebel 10 durch eine Klemmschraube 15 festsetzbar nach einer erfolgten Verstellung des Gelenkes 3, das heißt nach einer Lageveränderung der Lastangrifflinie 13 in bezug auf die Drehachse 14 der Kugelhalter 4, 5.

Das Voreinstellen der Lastangriffslinie 13 erfolgt in Kenntnis des Einflusses der Größe der Bremsscheibe 18 und des Belagwerkstoffes auf das Schrägverschleißverhalten des Bremsbelages 2, wobei solche Daten bereits vorhanden sind oder ermittelt werden können.

Die entsprechende Einstellung der Lastangriffslinie 13 erfolgt durch gegensinniges Verdrehen der Zapfen 7.

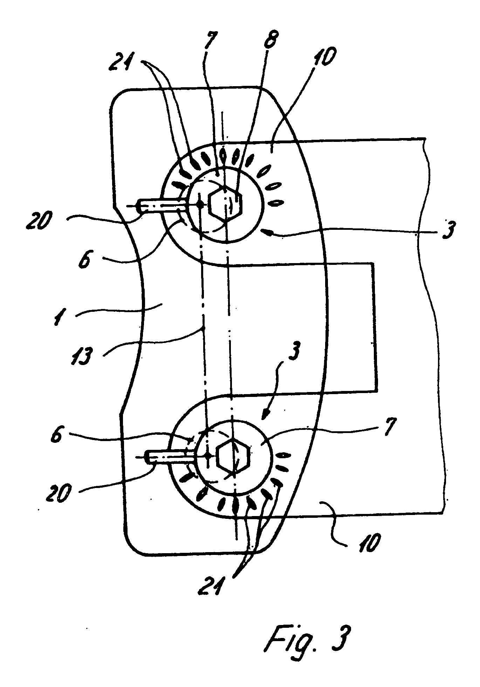

Für eine genau gleiche Einstellung der Drehwinkelposition an beiden Gelenken 3 können an den zugeordneten Zangenhebeln Markierungen 21 vorgesehen sein, die im Zusammenspiel mit einem am oberen Kugelhalter 4 bzw. dem Zapfen 7 angeschlossenen Positionierungsdorn 20 eine genaue Lageerkennung der jeweiligen Kugel 6 ermöglichen. Dies ist in der Figur 3 deutlich erkennbar.

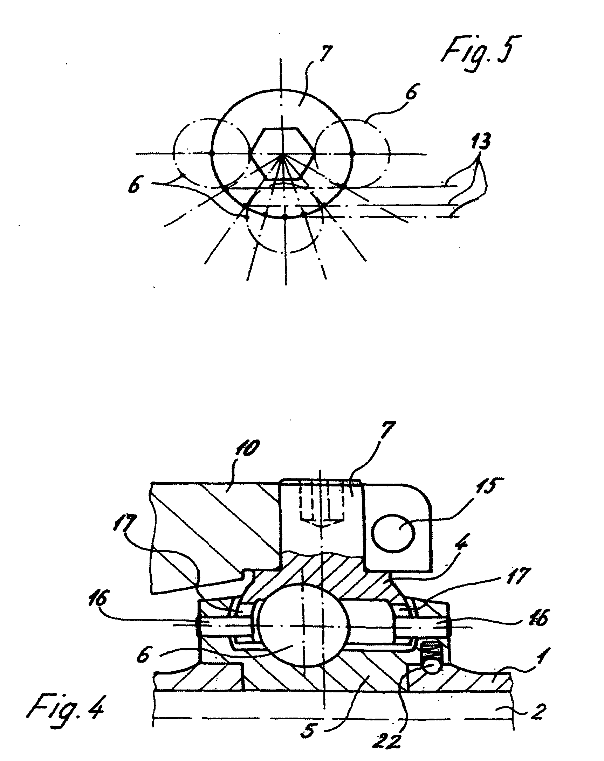

Der Zusammenhang zwischen dem jeweils eingestellten Drehwinkel und der Verschiebung des Kugelmittelpunktes und der damit einhergehenden Verschiebung der Lastangriffslinie ist in der Figur 5 zu erkennen, wobei sich deutlich, je nach Drehwinkel der Kugel 6 der Abstand der Lastangriffslinie 13, die durch den Mittelpunkt der Kugel definiert ist, zu einer Parallelen erkennbar ist, die durch den Mittelpunkt des Zapfens 7 verläuft.

In der Figur 4 schließlich ist eine Ausführungsvariante dargestellt, bei der der untere Kugelhalter 5 verdrehgesichert im Belaghalter 1 gehalten ist, wozu eine federbelastete Verdrehsicherung 22 im Form einer Kugel in dem Belaghalter 1 einliegt. Über die mitnehmenden Stifte 16 ist die Verdrehsicherung gleichzeitig für den oberen Kugelhalter 4 gegeben.

Diese Verdrehsicherung 22 stellt praktisch eine Betriebssicherung dar, die verhindert, dass das Gelenk 3 insgesamt aus seiner eingestellten Position, beispielsweise im Bereich der Markierungen 21 (Figur 3) gelöst wird, beispielsweise durch im Dauerbetrieb auftretende Kräfte oder Erschütterungen. Diese Verdrehsicherung 22 ist beispielhaft zu sehen und kann selbstverständlich auch in anderen Ausshmngsformen realisiert werden.

Im übrigen bildet das dargestellte neue Gelenk 3 eine spielfreie, vorgespannte Verbindung, durch die ein Klappern, Ausschlagen oder dergleichen wirksam verhindert wird.

### Bezugszeichenliste

- 1: Belaghalter
- 2: Bremsbelag
- 3: Gelenk
- 4: Kugelhalter
- 5: Kugelhalter
- 6: Kugel
- 7: Zapfen
- 8: Werkzeugaufnahme
- 9: Mitnehmerstift
- 10: Zangenhebel
- 11: Bügelfeder
- 12: Halterung
- 13: Lastangriffslinie
- 14: Drehachse
- 15: Klemmschraube
- 16: Stift
- 17: Schlitz
- 18: Bremsscheibe
- 19: Bremszange
- 20: Positionsdorn
- 21: Markierung
- 22: Verdrehsicherung

## Patentansprüche

1. Scheibenbremse, mit einer Bremsscheibe (18) und mindestens einem, vorzugsweise zwei Bremsbelägen (2), die mittels einer Bremszange (19) an die Bremsscheibe (18) anpressbar und jeweils an einem Belaghalter (1) angeordnet sind, an dem Zangenhebel (10) der Bremszange (19) jeweils über ein Gelenk (3) angeschlossen sind, wobei die gedachte Verbindungslinie zwischen den Gelenkachsen zweier Gelenke (3) eines der Belaghalter (1) als Lastangriffslinie (13) gegenüber dem Belaghalter (1) eine Kippachse bildet, **dadurch gekennzeichnet, dass** die Gelenkachse jedes Gelenkes (3) in einer Ebene parallel zum Belaghalter (1) lageveränderbar ist.

2. Scheibenbremse nach Anspruch 1, **dadurch gekennzeichnet, dass** das Gelenk (3) als Exzenter ausgebildet ist.

3. Scheibenbremse nach Anspruch 1 oder 2, **dadurch gekennzeichnet, dass** der Exzenter als Kugelexzenter gestaltet ist.

4. Scheibenbremse nach einem der vorhergehenden Ansprüche, **dadurch gekennzeichnet, dass** das Gelenk (3) zwei Kugelhalter (4, 5) aufweist, von denen ein unterer (5) drehbar im Belaghalter (1) und der obere (4) drehbar in einem zugeordneten Zangenhebel (10) gelagert ist, wobei zwischen den Kugelhaltern (4, 5) außermittig eine Kugel (6) positionssicher gehalten ist.

5. Scheibenbremse nach einem der vorhergehenden Ansprüche, **dadurch gekennzeichnet, dass** die Kugelhalter (4, 5) als rotationssymmetrische Körper ausgebildet sind mit einer gemeinsamen Drehachse (14).

6. Scheibenbremse nach einem der vorhergehenden Ansprüche, **dadurch gekennzeichnet, dass** die Kugel (6) in Kalotten einliegt, von denen jeweils eine in den Kugelhaltern (4, 5) auf den einander zugewandten Seiten angeordnet ist.

7. Scheibenbremse nach einem der vorhergehenden Ansprüche, **dadurch gekennzeichnet, dass** die Kugelhalter (4, 5) verdrehsicher miteinander verbunden sind.

8. Scheibenbremse nach einem der vorhergehenden Ansprüche, **dadurch gekennzeichnet, dass** die Kugelhalter (4, 5) in Zuspannrichtung der Bremsstange (19) gegeneinander verschwenkbar sind.

9. Scheibenbremse nach einem der vorhergehenden Ansprüche, **dadurch gekennzeichnet, dass** zur Verschwenkung der Kugelhalter (4, 5) einerseits und zum verdrehsicheren Anschluss in einem der Kugelhalter (5) mindestens ein radial sich erstreckender Stift (16) befestigt ist, der in einen etwa parallel zur Drehachse (14) des Gelenkes (3) sich erstreckenden Schlitz (17) des anderen Kugelhalters (4) eingreift und an den zugeordneten Wandungen des Schlitzes (17) anliegt.

10. Scheibenbremse nach einem der vorhergehenden Ansprüche, **dadurch gekennzeichnet, dass** die beiden Kugelhalter (4, 5) durch einen sich axial erstreckenden Mitnehmerstift (9) verdrehsicher miteinander verbunden sind.

11. Scheibenbremse nach einem der vorhergehenden Ansprüche, **dadurch gekennzeichnet, dass** der obere Kugelhalter (4) einen zentrischen Zapfen (7) aufweist, der in den zugeordneten Zangenhebel (10) eingesteckt ist.

12. Scheibenbremse nach einem der vorhergehenden Ansprüche, **dadurch gekennzeichnet, dass** der Zapfen (7) mittels einer in dem Zangenhebel (10) angeordneten Klemmschraube (15) festsetzbar ist.

13. Scheibenbremse nach einem der vorhergehenden Ansprüche, **dadurch gekennzeichnet, dass** der obere Kugelhalter (4) federbelastet an der Kugel (6) anliegt.

14. Scheibenbremse nach einem der vorhergehenden Ansprüche, **dadurch gekennzeichnet, dass** eine Bügelfeder (11) vorgesehen ist, die in den Zangenhebel (10) eingreift und sich am Belaghalter (1) als Widerlager abstützt.

15. Scheibenbremse nach einem der vorhergehenden Ansprüche, **dadurch gekennzeichnet, dass** die Bügelfeder (11) in einer Halterung (12) des Belaghalters (1) gehalten ist.

16. Scheibenbremse nach einem der vorhergehenden Ansprüche, **dadurch gekennzeichnet, dass** die Bügelfeder (11) in die beiden, einem Belaghalter (1) zugeordneten Zangenhebel (10) der Bremszange (19) eingreift.

17. Scheibenbremse nach einem der vorhergehenden Ansprüche, **dadurch gekennzeichnet, dass** am Zapfen (7) ein Positionsdorn (20) befestigt ist, der jeweils mit einer Mehrzahl von auf dem zugeordneten Zangenhebel (10) vorgesehenen Markierungen (21) korrespondiert.

18. Scheibenbremse nach einem der vorhergehenden Ansprüche, **dadurch gekennzeichnet, dass** das Gelenk (3) Rastmittel aufweist, mit denen das Gelenk (3) in vorbestimmten Schwenkpositionen im Belaghalter (1) arretierbar ist.

19. Scheibenbremse nach einem der vorhergehenden Ansprüche, **dadurch gekennzeichnet, dass** das Arretiermittel aus einer Verdrehsicherung (22) in Form einer federbelasteten Kugel besteht, die in entsprechende Ausnehmungen des Belaghalters (1) herausnehmbar eingreift, wobei die Ausnehmungen in vorbestimmten Winkelabständen zueinander angeordnet sind.

20. Scheibenbremse nach einem der vorhergehenden Ansprüche, **dadurch gekennzeichnet, dass** die Verdrehsicherung (22) im unteren Kugelhalter (5) angeordnet ist.

## Claims

1. Disc brake comprising a brake disc (18) and at least one brake lining (2), preferably two brake linings (2), which are adapted to be pressed by means of a brake calliper (19) against said brake disc (18), whereof each is disposed at a respective brake lining support (1) and whereof each is connected to a calliper lever (10) of said brake calliper (19) via a joint (3), with the imaginary connecting line between the articulation axes of two joints (3) of one of said brake lining supports (1) constituting a line of load attack (13) and forming a tilting axis relative to said brake lining support (1), **characterised in that** the articulation axis of each joint (3) is variable in its position in a plane parallel to said brake lining support (1).

2. Disc brake according to Claim 1, **characterised in that** said joint (3) is configured as eccentric.

3. Disc brake according to Claim 1 or 2, **characterised in that** said eccentric is configured as spherical eccentric.

4. Disc brake according to any of the preceding Claims, **characterised in that** said joint (3) comprises two ball holders (4, 5) whereof a lower ball holder (5) is supported for rotation in said brake lining support (1) whereas the upper ball holder (4) is supported for rotation in an associated calliper lever (10), with a ball (6) being held between said ball holders (4, 5) in an eccentric position so as to be invariable in its position.

5. Disc brake according to any of the preceding Claims, **characterised in that** said ball holders (4, 5) are configured as bodies of rotational symmetry with a common axis of rotation (14).

6. Disc brake according to any of the preceding Claims, **characterised in that** said ball (6) rests in calottes whereof one respective calotte is disposed in said ball holders (4, 5) on the sides facing each other.

7. Disc brake according to any of the preceding Claims, **characterised in that** said ball holders (4, 5) are connected to each other so as to prevent any torsion.

8. Disc brake according to any of the preceding Claims, **characterised in that** said ball holders (4, 5) are pivotable relative to each other in the direction of application of the brake rod (19).

9. Disc brake according to any of the preceding Claims, **characterised in that** for pivoting said ball holders (4, 5), on the one hand, and for connection preventing torsion, at least one pin (16) extending in the radial direction is fastened in one of said ball holders (5), which is engaged in a slot (17) extending approximately in parallel with the axis of rotation (14) of said joint (3) of the other ball holder (4) and bears against the associated walls of said slot (17).

10. Disc brake according to any of the preceding Claims, **characterised in that** said two ball holders (4, 5) are connected to each other by means of a driving pin (9) extending in the radial direction, so as to prevent any torsion.

11. Disc brake according to any of the preceding Claims, **characterised in that** said upper ball holder (4) comprises a centred pivot (7) that is inserted into said associated calliper lever (10).

12. Disc brake according to any of the preceding Claims, **characterised in that** said pivot (7) is adapted to be secured by means of a clamping screw (15) disposed in said calliper lever (10).

13. Disc brake according to any of the preceding Claims, **characterised in that** said upper ball holder (4) bears against said ball (6) under the action of a spring.

14. Disc brake according to any of the preceding Claims, **characterised in that** a yoke-type spring (11) is provided which is engaged in said calliper lever (10) and is supported on said brake lining holder (1) as abutment.

15. Disc brake according to any of the preceding Claims, **characterised in that** said yoke-type spring (11) is held in a mount (12) of said brake lining holder (1).

16. Disc brake according to any of the preceding Claims, **characterised in that** said yoke-type spring (11) is engaged in both calliper levers (10) of said brake calliper (19), which are associated with one brake lining holder (1).

17. Disc brake according to any of the preceding Claims, **characterised in that** a position indicator needle (20) is fastened on said pivot (7), which corresponds with each marker among a plurality of markers (21) provided on the associated calliper lever (10).

18. Disc brake according to any of the preceding Claims, **characterised in that** said joint (3) comprises locking means serving to lock said joint (3) in predetermined pivoting positions in said brake lining holder (1).

19. Disc brake according to any of the preceding Claims, **characterised in that** said locking means consists of a means preventing any torsion (22) in the form of a spring-loaded ball that is removably engaged in corresponding recesses of said brake lining holder (1), with said recesses being disposed in predetermined angular distances relative to each other.

20. Disc brake according to any of the preceding Claims, **characterised in that** said locking means preventing any torsion 822) is arranged in said lower ball holder (5).

## Revendications

1. Frein à disque comprenant un disque de frein (18) et au moins une garniture de frein (2), de préférence deux garnitures de frein (2), qui sont apte à être pressé, moyennant une mâchoire de frein (19), audit disque de frein (18), dont chacune est disposée à un élément porte-garniture (1) respectif, et dont chacune est reliée au levier de mâchoires (10) de ladite mâchoire de frein (19) via un joint (3), à la ligne de jonction imaginaire entre les axes d'articulation de deux joints (3) d'un desdites éléments porte-garniture (1) constituant une ligne d'action de charge (13) et formant un axe de basculement relativement audit élément porte-garniture (1), **caractérisé en ce que** l'axe d'articulation de chaque joint (3) est variable en sa position dans un plan parallèle audit élément porte-garniture (1).

2. Frein à disque selon la revendication 1, **caractérisé en ce que** ledit joint (3) est configuré sous forme d'un excentrique.

3. Frein à disque selon la revendication 1 ou 2, **caractérisé en ce que** ledit excentrique est configuré sous forme d'un excentrique sphérique.

4. Frein à disque selon une quelconque des revendications précédentes, **caractérisé en ce que** ledit joint (3) comprend deux appuis de sphère (4, 5), dont un appui de sphère inférieur (5) est logé, de manière rotative, dans ledit élément porte-garniture (1), pendant que le appui de sphère supérieur (4) est logé, de manière rotative, dans un levier de mâchoires affecté (10), à une sphère (6) étant tenue entre lesdits appuis de sphère (4, 5) en une position excentrée de manière invariable en position.

5. Frein à disque selon une quelconque des revendications précédentes, **caractérisé en ce que** ledit appuis de sphère (4, 5) sont configurés sous forme de corps à symétrie de révolution et à un axe de révolution commun (14).

6. Frein à disque selon une quelconque des revendications précédentes, **caractérisé en ce que** ladite sphère (6) est posée dans des calottes dont une calotte respective est disposée dans lesdits appuis de sphère (4, 5) aux côtés l'un à face de l'autre.

7. Frein à disque selon une quelconque des revendications précédentes, **caractérisé en ce que** lesdits appuis de sphère (4, 5) sont reliés l'un à l'autre d'une manière à empêcher toute torsion.

8. Frein à disque selon une quelconque des revendications précédentes, **caractérisé en ce que** lesdits appuis de sphère (4, 5) sont pivotables, l'un relativement à l'autre, en sens d'application du tirant de serrage de frein (19).

9. Frein à disque selon une quelconque des revendications précédentes, **caractérisé en ce que** pour le basculement desdits appuis de sphère (4, 5), d'un côté, et pour le raccordement empêchant toute torsion, au moins une goupille (16) est fixée dans un desdits appuis de sphère (5), s'étendant en sens radial, qui se trouve en prise dans une fente (17) s'étendant en parallèle environ à l'axe de révolution (14) dudit joint (3) de l'autre appui de sphère (4) et porte contre les parois affectées de ladite fente (17).

10. Frein à disque selon une quelconque des revendications précédentes, **caractérisé en ce que** lesdits deux appuis de sphère (4, 5) sont reliés l'un à l'autre moyennant d'une broche d'entraînement (9) s'étendant en sens axial, d'une manière empêchant toute torsion.

11. Frein à disque selon une quelconque des revendications précédentes, **caractérisé en ce que** ledit appui de sphère supérieur (4) comprend une cheville centrée (7), qui est fichée dans ledit levier de mâchoires affecté (10).

12. Frein à disque selon une quelconque des revendications précédentes, **caractérisé en ce que** ladite cheville (7) est apte à être arrêté au moyen d'une vis de serrage (15) disposée dans ledit levier de mâchoires (10).

13. Frein à disque selon une quelconque des revendications précédentes, **caractérisé en ce que** ledit appui de sphère supérieur (4) porte contre ladite sphère (6) sous la commande d'un ressort.

14. Frein à disque selon une quelconque des revendications précédentes, **caractérisé en ce qu'**un ressort en étrier (11) est disposé, qui se trouve en prise dans ledit levier de mâchoires (10) et s'appuie audit élément porte-garniture (1) en tant qu'étai de contre-appui.

15. Frein à disque selon une quelconque des revendications précédentes, **caractérisé en ce que** ledit ressort en étrier (1) est tenu dans un support (12) dudit élément porte-garniture (1).

16. Frein à disque selon une quelconque des revendications précédentes, **caractérisé en ce que** ledit ressort en étrier (11) se trouve en prise dans les deux leviers à fourche (10) affectés de ladite mâchoire de frein (19).

17. Frein à disque selon une quelconque des revendications précédentes, **caractérisé en ce qu'**une épine indicatrice de position (20) est fixé à ladite cheville (7), qui se trouve en correspondance avec un repère respectif parmi une pluralité de repères (21) prévus audit levier de mâchoires (10) affecté.

18. Frein à disque selon une quelconque des revendications précédentes, **caractérisé en ce que** ledit joint (3) comprend des moyens de verrouillage permettant le blocage dudit joint (3) en positions de basculement prédéterminées dans ledit élément porte-garniture (1).

19. Frein à disque selon une quelconque des revendications précédentes, **caractérisé en ce que** ledit moyen de verrouillage est constitué par un moyen contre la torsion (22) sous forme d'une bille commandée par ressort, qui se trouve en prise, de façon retirable, dans des creux correspondants dans ledit élément porte-garniture (1), aux creux étant disposés aux écarts angulaires prédéterminés l'un de l'autre.

20. Frein à disque selon une quelconque des revendications précédentes, **caractérisé en ce que** ledit moyen contre la torsion (22) est disposé dans ledit appui de sphère (5) inférieur.
